# EUROPEAN PATENT APPLICATION

(11) **EP 2 608 058 A1**
(43) Date of publication of application: **26.06.2013**
(21) Application number: 11306731.8
(22) Date of filing: 21.12.2011
(51) Int. Cl.: G06F 17/30

(54) **Method for obtaining user personalized data on audio/video content and corresponding device**

(71) Applicant: Thomson Licensing, 92130 Issy-les-Moulineaux (FR)
(72) Inventor: Straub, Gilles, 35576 Cesson-Sévigné (FR); Chevallier, Louis, 35576 Cesson-Sévigné (FR); Vigouroux, Jean-Ronan, 35576 Cesson-Sévigné (FR)
(74) Representative: Perrot, Sébastien

(57) **Abstract**

The present invention relates to the field of user profiling and content recommendation. The purpose of this invention is to solve the problem known as the 'user cold start' problem by providing a method and device that helps speeding up the learning process of a recommendation system for new users that are unknown to the recommendation system.

## Description

### 1. Field of invention.

The present invention relates to the field of user profiling and content recommendation.

### 2. Technical background.

Recommendation or recommender systems are used to recommend items to a user (images, movies, video on demand, music, books, web pages) that are likely to be also of interest to that user. A recommendation system can help users to find interesting content among an overwhelming content offer, such as provided via the Internet. The recommendation system provides personalized and rated lists of items through prediction of what the likely items of interest are for a particular user, based for a user profile built from example from the user's purchase and/or browse history. Typically, a recommendation system matches a user profile to some reference characteristics, and then seeks to find appropriate alternative items that are coherent with the user profile.

Existing recommendation systems ask users to rate (rank) items that they have purchased or downloaded, and then exploit this knowledge to recommend other items, based on common behavior between users. When a user orders some item, he is advised that those who acquired the same item also acquired other goods that he may also like.

Such systems are based on called collaborative filtering (CF) recommendation algorithms which predict user preferences for items by learning user-items relationships. CF works by exploring a matrix *R* of user preferences (e.g., ratings) for the items. Each row represents a user consumption and each column an item. *Rᵤᵢ* represents the rating a user *u* gave to item *i*. *Rᵤᵢ* can either be an integer value, for instance between 1 and 5, or a continuous value. Initially, most of the values of the matrix are unknown. The rating matrix sparsity, i.e., the percentage of unknown values, is often more than 99% in real life situations, because most users do not rate items after having purchased them.

State of art recommendation systems work well from the point where a user has rated/ranked or purchased sufficient items so that the system has collected enough data to create an accurate user profile. However when a new user is introduced to the recommendation system, he is not known by it, and thus has no user profile, and the recommendation system is by consequence unable to provide accurate predictions. The recommendation system will first need some item purchase, web browsing behavior and/or item ratings by the user in order to constitute a representative user profile for the new user, which can then be used to propose appropriate recommendations. In recommendation system terminology, this problem is known as the 'user cold start' problem.

For recommendation systems there thus exists a contradiction between the need to have information related to the preferences of a new user and the fact that a new user is forcibly unknown to the system.

According to prior art solutions have been found that for instance estimate the rating of items to the mean of the ratings that the item has obtained in a community of users. However, such estimation remains suboptimal because there is no adaptation to the individual taste of the particular user.

### 3. Summary of the invention.

The purpose of this invention is to solve the above problem by providing a method and device that helps to speed up the learning process of the recommendation system for new users that are unknown to the recommendation system.

The discussed advantages and other advantages not mentioned in this document will become clear upon the reading of the detailed description of the invention that follows.

In the following, the word 'match' or 'matching' of information related to content is used. In the context of the invention, when information related to content matches, it means that a comparing of information related to content has found a sufficient degree of similarity in the compared information that allows to conclude that the content to which the information relates is the same, or at least similar. For example, a comparison of a checksum, if identical, is a match. The compared checksums is matching information. For example, a comparison of fingerprints of contents, if within a predetermined fingerprint distance from each other, is considered to be matching information. For example, a comparison of a text string of a content file name to a text string of the name of a content item matches if there is enough reason to believe that these mean the same (for example a user content is named 'the_who-at_wembley 1979.wmv', which reasonably matches to a content item 'Audio track of live concert of The Who at the Wembley stadium 1979').

In the following, the term 'audio/video' is used, meaning audio alone, video alone, or a combination of audio and video.

In order to obtain user personalized data on audio/video content, the invention proposes a method implemented by a server device, the method comprising a step of- collection of first information related to a first audio/video content stored on at least one device accessible to both the user and the server device, a step of identification of the first audio/video content, through matching of the first information related to the first audio/video content to second information accessible to the server device relating to an identified second audio/video content, a step of association of an identifier of the identified second audio/video content to collected the first information in user personalized data on audio/video content when the first and the second information match.

According to a variant embodiment of the invention, the method further comprises a step of adding of metadata related to the identified second audio/video content to the user personalized data.

According to a variant embodiment of the invention, the user personalized data comprises a rating of the identified second audio/video content.

According to a variant embodiment of the invention, the rating is determined as a function of at least a frequency of reoccurrence of at least one metadata item value in the user personalized data.

According to a variant embodiment of the invention, the method further comprises a step of, for each of the first audio/video content that cannot be identified, storing of collected the first information related to the first audio/video content that cannot be identified, and reiteration of at least the identification step when the second information accessible to the server device is updated.

According to a variant embodiment of the invention, the first information comprises a first text string obtained from a file name of the first audio/video content, and that the matching comprises comparing of the first text string with a second text string comprised in the second information.

According to a variant embodiment of the invention, the first information comprises a first audio/video fingerprint obtained by fingerprint computation of the first audio/video content, and that the matching comprises comparing of the first audio/video fingerprint with a second audio/video fingerprint comprised in the second audio/video information.

According to a variant embodiment of the invention, the first information comprises a first text fragment obtained through voice recognition of at least a part of the first audio/video content and that the matching comprises comparing of the first text fragment with a second text fragment comprised in the second audio/video information.

According to a variant embodiment of the invention, the first information comprises a third text string obtained from a directory path of a storage location of the first audio/video content and that the matching comprises comparing the second text string with a fourth text string comprised in the second audio/video information.

The method also concerns a device for obtaining user personalized data on audio/video content, the device comprising means for collection of first information related to a first audio/video content stored on at least one device accessible to both the user and the server device, means for identification of the first audio/video content, through matching of the first information related to the first audio/video content to second information accessible to the server device relating to an identified second audio/video content, and means for association of an identifier of the identified second audio/video content to collected the first information in user personalized data on audio/video content when the first and the second information match.

According to a variant embodiment of a device according to the invention, the device further comprises means for adding of metadata related to the identified second audio/video content to the user personalized data.

### 4. List of figures.

More advantages of the invention will appear through the description of particular, non-restricting embodiments of the invention. The embodiments will be described with reference to the following figures:
**Figure 1** shows a flow chart of the method of the invention.
**Figure 2** shows an example of a device implementing the invention.

### 5. Detailed description of the invention.

The current invention allows solving the 'user cold start' problem as previously discussed. In particular, the method and device of the invention allow to identify items of content detained by a user, and gather data on these items (= user personalized data on audio/video content) by coupling of the user data to metadata related to the identified content item. The user personalized data can then for example be exploited by a recommendation system to propose content to the 'unknown' new user that is according to his preferences.

When an unknown user connects to a server implementing the invention, the server gets access to the content accessible by the user.

The server in the context of this invention is for example: a dedicated device, or a server application program. This server device has access to information that allows it to identify content items stored on the content accessible by the user, and to get metadata (meaning data on data) on identified content items, for example, through access to a content data base, stored directly on the server device itself or accessible by the server device, for example through a network connection such as Internet to a distant server providing the content data base.

Content accessible by the user means here the set of content items which can be accessed by the user, which may be subject to access rights, and indifferently of where the content is stored (on a single device, on multiple devices, on a device connected individually, on a set of devices connected in a home network, on the Internet).

Different ways of getting access to the user's content will be described further on. The server 'the content accessible by the user scans' (meaning for example searching a storage device for audio/video content files, in directories to which the user has access) and collects information for each content item found (for example content item file name, content item file size, content item storage directory path, number of times content viewed, content encoding quality). When content items are found, the server then tries to identify the content by 'matching' the content item to information related content that is identified (or 'known') by the server, for example from a content catalog accessible in a database accessible by the server, such as IMDB (Internet Movie Data Base). This database can be different from a content database used by a vendor's recommendation system, which uses his own, probably more restricted, database of content items that he sells or rents. The matching can be done via different ways, such as using the content file name, the content file size, and/or the content directory path. If a match cannot be found via this 'easy' manner, other methods are possible to do the matching, such as checksum compare, extracting a portion of content and comparing it with content known by the server, or fingerprint compare method. The checksum technique is used to detect a bit-by-bit exact duplicate content and the fingerprint technique is used to detect similarity between content notwithstanding transformation, such as cropping and different encoding (for example, a movie remains a 'same' movie even if encoded in different formats). Once the matching is done, the content item is identified (or 'known') by the server, and the server can associate the found content identifier to the collected data in user personalized data on audio/video content. Once this matching has been done, metadata can be associated from the coupling of the user content to an identified content from the database accessible by the server. For example, when content item 'x' of the user has been matched by the server via the Internet Movie Data Base to a movie 'y', metadata from movie 'y' can be associated or added to the user personalized data for content item 'x', for example:
Retrieved directly from the user content item (='first in formation')
   - User file name: x;
   - Encoding type: XVid;
   - Encoding quality: 576i;
Retrieved from IMDB database after matching (=metadata, ='second information')
   - IMDB identifier: imdb.y;
   - Content type: Movie;
   - Title: Valkyrie;
   - Director: Bryan Singer;
   - Main actor: Tom Cruise;
   - Main second role: Carice van Houten;
   - Categories: Drama/ History/Thriller;
   - Date of production: 2008.

Once matched, the further metadata can be obtained and added to the user personalized data. For example, it can be determined from the relation of user accessible content to known content, that a user is mainly interested in movies of the genre Western because a greater part of content of the user matched to information related to content known by the server having the following metadata associated: category: western, main actor: John Wayne. This user personalized data when used by a recommender system can determine that the same user might also be interested in a 2010 remake of the film 'True Grit' by the Coen brothers, since this is also a Western genre movie, based on the same novel written by Charles Portis on which was based Henry Hathaway's version of True Grit from 1969 in which starred John Wayne. As another example, the user personalized data can be used by a recommender system to put user-accessible and identified content into relation with interests of other users (collaborative model), such as: users that are interested in Western genre movies have generally also shown interest in other type of action movies.

It is also possible that in a first phase a content item cannot be matched to information related to content items known by the server. This can happen for example when the content item is not (yet) in the database accessible by the server (IMDB for example) because the content item is yet unknown (no information related to this content item is yet added to the database), or the content item is a recording of a television programme, or the content item is a compilation of short extracts from known content items, which excludes any matching by its name or by employing of a fingerprint method. In such a case, though the content item cannot (yet) be identified, the server can store the data related to the content item for an ulterior matching in a later phase, for example, when new items are added to the server database.

Thus, the user personalized data on his audio/video content can be exploited by a recommendation system, which uses the user personalized data to predict user preferences.

It is also possible to, once the user-accessible content is identified, to associate a rating to the content accessible by the user. For example, if a user has lots of Western genre movies stored, a high rating can be given to this type of movies. In order to reduce the quantity of data, the collected data is not stored, but rather the rating determined from the collected data is stored.

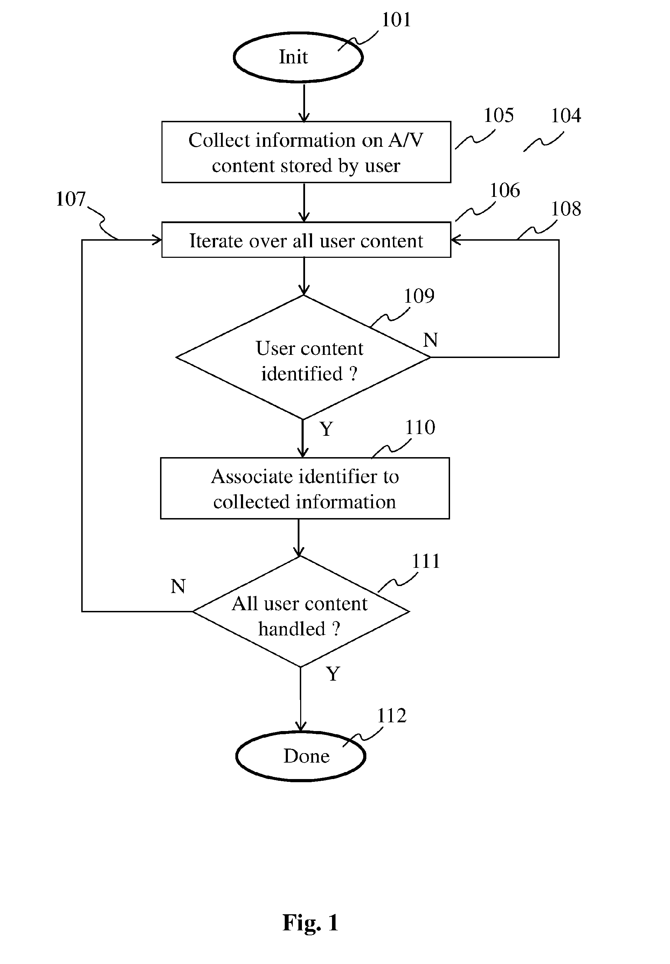

**Figure 1** illustrates a flow chart of a particular embodiment of the method of the invention.

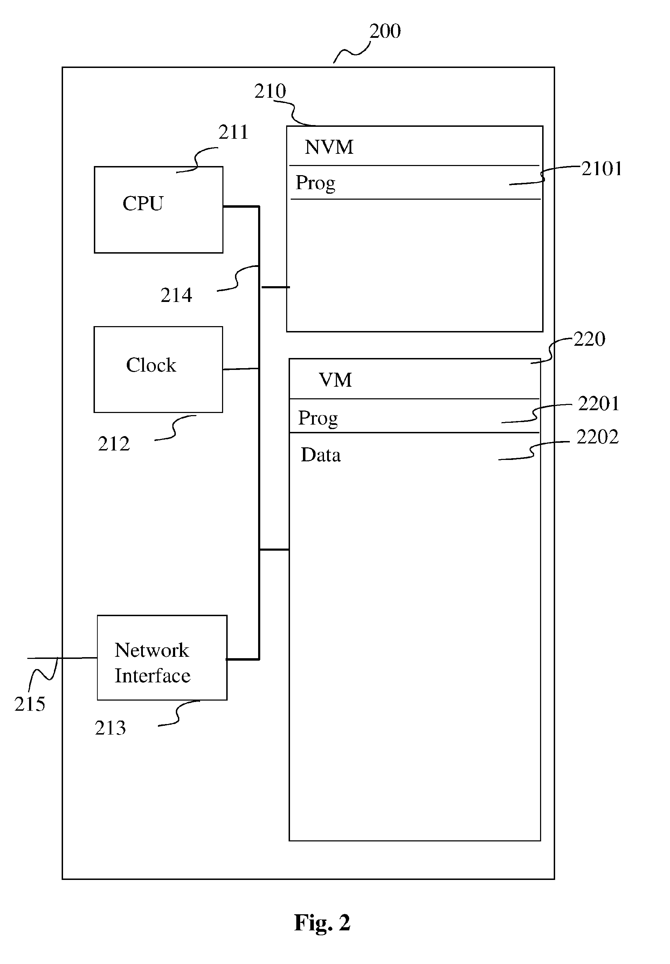

In a first initialization step 101, variables are initialized for the functioning of the method. When the method is implemented in a device such as device 200 of figure 2, the step comprises for example copying of data from non-volatile memory to volatile memory and initialization of memory. In a step 105, information is collected that is related to first audio/video content stored on one or more devices accessible to both the user and the server device (for example, stored on one or more user devices to which the user has given the server access). In a step 109, it is determined if audio/video content accessible on the user device (or devices) can be identified (or 'matched') to second information related to audio/video content accessible to the server device. This is a step of comparing that is done through comparing the information collected in the collection step to, for example, the mentioned database entries, or directly to audio/video content stored by a VoD server. If the comparison is successful, i.e. the information matches (for example, a content item found on the client device has a filename that corresponds to a database entry accessible by the server: filename 'the_who-at_wembley 1979.wmv' matches to 'The Who at Wembley 1979'), an identifier of the matching second audio/video content is associated to the collected data of the first audio/video content. The algorithm continues with a decisional step 111 where it is verified if all audio/video content items accessible to the user have been handled. If not, the iteration continues with a next content item (return to step 106 via arrow 107). If yes, the algorithm stops with step 112.

The flow chart of figure 1 is for illustrative purposes and the method of the invention is not necessarily implemented as such. Other possibilities of implementation comprise the parallel execution of steps or batch execution. For example, steps 106-111 can exclude step 110 that is either executed in parallel, or executed after step 111.

The user personalized data constructed by the method can be exploited by many applications that take advantage of user preferences, such as personalization of an offer of a web store, personalization of a Video on Demand offering, personalization of a streaming radio channel.

Access to information related to user content items for the collection step of the method is for example done by means of a script in a web page (e.g. JavaScript), running on the user's device(s) where the webpage is rendered. According to a variant embodiment, and to incite the user to give access to his content items, the user downloads on a website an application which implements the method of the invention; for example, an application that allows the user to index and organize his files, the user in turn allowing access for the method of the invention.

**Table 1** hereunder gives an example of what user personalized data on audio/video content obtained by the method for a particular user may look like.

**Table 1 - Example personalized data**

| **First information** | **Identifier** | **Metadata** |
|---|---|---|
| **File name:** rio.bravo.1959.hd1080p.xvid | IMDB.1123678 | **Name:** Rio Bravo |
| **File type :** video | | **Date:** 1959 |
| **Accessed:** 15 times, | | **Main actor:** John Wayne |
| **Resolution:** HD 1080p, | | **Second roles:** Dean Martin, Ricky Nelson |
| **Encoding:** XVid | | **Director:** Howard Hawks |
| **Path:** < MyVideo/JohnWayne> | | **Category:** Western/Romance/Drama |
| **Checksum:** 7409A5F6E | | **Writers:** Jules Furthman, Leigh Brackett |
| **Fingerprint:** {8A56F789,5678CE, E45} | | |
| **File name:** true.grit.1969.hd1080p.xvid | IMDB.3457890 | **Name:** True Grit |
| **File type :** video | | **Date:** 1969 |
| **Accessed:** 10 times, | | **Main actor:** John Wayne |
| **Resolution:** HD 1080p, encoding Xvid | | **Second roles:** Kim Darby, Glen Campbell |
| **Path:** < MyVideo/JohnWayne> | | **Director:** Henry Hathaway |
| **Checksum:** 340935F69 | | **Category:** Adventure/Western/Drama |
| **Fingerprint:** {1B56F78A,7638A1, C4B} | | **Writers:** Charles Portis (novel), Marguerite |
| | | Roberts |
| **File name:** | IMDB.81200 | **Name:** True Grit |
| monty.python.and.the.holy.grail.1975.xvid | | **Date:** 1969 |
| **File type :** video | | **Main actor:** John Wayne |
| **Accessed:** 1 times, | | **Second roles:** Kim Darby, Glen Campbell |
| **Resolution:** SD 576i, | | **Director:** Henry Hathaway |
| **Encoding:** xvid, | | **Category:** Adventure/Western/Drama |
| Path: <MyVideo/goodlaugh> | | **Writers:** Charles Portis (novel), Marguerite |
| **Checksum:** 56AE78C2 | | Roberts |
| **Fingerprint:** {3F34789C,7638A1, 64C} | | |
| **File name:** the_who-at_wembley 1979.wmv | IADB.678090U | **Name:** The Who at the Wembley Stadium |
| **File type :** audio | | **Date:** 1979 |
| **Accessed:** 3 times, | | **Main actor:** The Who |
| **Resolution:** n/a, | | **Second roles:** n/a |
| **Encoding:** wmv, | | **Director:** n/a |
| **Path:** <MyMusic/live> | | **Category:** Live concert (audio track) |
| **Checksum:** 7891234 | | **Writers:** n/a |
| **Fingerprint:** {3F6549C,567891, 65A} | | |

Table 1 is a simplified table that is used for illustrative purposes. There exist many prior art techniques that allow to store data in a more efficient manner and that can be used to store the data above. Likewise, the user personalized data on audio/video content can comprise other data than shown above, according to the needs of the application that uses the data in a later phase (such as a recommendation system); for example, the data compiled can be put into relation with each other to extract further metadata. For example, it can be already determined from the data in table 1, that this user seems to like movies starring John Wayne. Movie content items starring this actor may thus receive a rating attribute with a value that is representative for the popularity of this content item for the particular user.

It may also be possible to match each user content item to more than one content items known to the server (for example, a same content item may be matched to multiple versions of a 'same' content item, such as different lingual versions of a same movie).

The matching can be done in different ways.

According to a particular embodiment, the matching is done using a text string that is obtained from a file name of the audio/video content item. As a 'best first chance' to get a match, this can be advantageous, because it is most likely that a user stores files on his device(s) using a recognizable file name, and such matching is not very costly in terms of use of resources (CPU, memory, time).

Likewise, the matching can be done via a text string that is obtained from a directory path of the content item. This can be advantageous, because it is most likely that a user stores files on his device(s) using a recognizable file path (such as 'movies/John Carpenter'), which then can be used in the determination step of the method of the invention to match the file path to information representative of files stored by a server device.

According to a variant embodiment, a fingerprint of a content item is used for matching, that is acquired via a fingerprinting technique. Fingerprinting is a technique that maps an arbitrarily large data item (such as a computer file) to a much shorter bit string, its fingerprint that uniquely identifies the original data. Fingerprints are typically used to avoid a computing-intensive comparison and transmission of bulky data, such as audio/video content. When the fingerprint has been acquired, it can be matched to a fingerprint of the content items accessible by the server, in order to identify a matching content item.

According to a variant embodiment, the matching is done using a text fragment that is obtained through voice recognition of a part of the content item ('Speech-To-Text' or 'STT') and that is matched to a text fragment of the contents accessible by the server. Using this is technique a phrase spoken or sung in an audio/video content item is extracted from a portion of the content item, then analyzed by voice recognition, and converted into a text fragment. For example, the text fragment is matched against a database containing song lyrics or movie scripts.

The above methods can be combined to form a particular efficient method that can obtain a high matching score, each combination offering an improved chance to get a matching.

As mentioned previously, and according to a particular embodiment of the invention, the data that is collected from the user's content item, comprises data on the number of times that the user accessed the file, and/or the latest visioning date. Such information can for example be retrieved from the media renderer used (like MediaPlayer history) to render the audio/video content item.

According to a variant embodiment, the collected first information comprises a content item rating.

Such rating is for example determined as a function of a frequency of reoccurrence of one or more metadata item values in the user personalized data. To use the example of Table 1, it can be determined from this data that metadata item Main actor with value John Wayne reoccurs frequently (in 3 of the 4 audio/video content items of the user). A high rating can thus be added to the personalized data for this type of content.

Alternatively, such rating established as a function of the number of content items found. If the number is below a predetermined threshold (for example < 50 movie content items found), the user can be considered as a user that uses the content items for his own use and a high content item rating can be attributed. If however the number is above a high threshold (for example > 1000 movie content items found), the user can be considered as potentially not liking or viewing all content he has, and a lower rating for all audio/video content items found can be attributed.

Alternatively, the rating can take into account the storage date of the content items. For example, if many content items have a same storage date, this means that they were copied together, and the user may not yet have had the opportunity to remove files of lesser interest, which can then be a reason to attribute an equivalent rating for the content items having the same date.

Alternatively, the rating can take into account the encoding quality of the content items. For example, if the user has mainly content items with high encoding quality, one can presume that the content items with the high encoding quality are of high interest to the user, in which case a high rating can be justifiable for these content items.

Alternatively, the rating can take into account the number of times a content item was accessed (access frequency).

Alternatively, the rating can take into account the last data a content item was accessed.

Alternatively, the rating can take into account a user rating, given explicitly by the user.

The above alternatives can be advantageously combined to form a particular efficient file rating variant. For example, storage date may be coupled to the number of times the same content was accessed. For a content that was accessed only once, it is interesting to know if the content was accessed recently or not, which can influence the rating: recently accessed content with a low access frequency is given a higher rating than content with a same access frequency but that has not been accessed since a long time.

**Figure 2** shows an example of a device implementing the invention. The device 200 comprises the following components, interconnected by a digital data- and address bus 214:
- a processing unit 211 (or CPU for Central Processing Unit);
- a non-volatile memory NVM 210 ;
- a volatile memory VM 220 ;
- a clock unit 212, providing a reference clock signal for synchronization of operations between the components of the device 200 and for other timing purposes;
- a network interface 213, for interconnection of device 200 to client devices and other server devices connected in a network via connection 215.

It is noted that the word "register" used in the description of memories 210 and 220 designates in each of the mentioned memories, a low-capacity memory zone capable of storing some binary data, as well as a high-capacity memory zone, capable of storing an executable program, or a whole data set.

Processing unit 211 can be implemented as a microprocessor, a custom chip, a dedicated (micro-) controller, and so on. Non-volatile memory NVM 210 can be implemented in any form of non-volatile memory, such as a hard disk, non-volatile random-access memory, EPROM (Erasable Programmable ROM), and so on. The Non-volatile memory NVM 210 comprises notably a register 2201 that holds a program representing an executable program comprising the method according to the invention. When powered up, the processing unit 211 loads the instructions comprised in NVM register 2101, copies them to VM register 2201, and executes them.

The VM memory 220 comprises notably:
- a register 2201 comprising a copy of the program 'prog' of NVM register 2101 ;
- a register 2202 comprising read/write data that is used during the execution of the method of the invention, such as the user profile.

A device such as device 200 is an example of a device that is suited for implementing the method of the invention, and implements the means of the invention. Network interface 213 implements the means for collection of first information related to a first audio/video content stored on at least one device accessible to both the user and the server device 200; CPU 211 implements the means for identification of the first audio/video content, through matching of the first information related to the first audio/video content to second information accessible to the server device relating to an identified second audio/video content; and also implements the means for association of an identifier of the identified second audio/video content to collected the first information in user personalized data on audio/video content when the first and the second information match.

According to a variant embodiment of the device according to the invention, the device comprises means for adding of metadata related to the identified second audio/video content to the user personalized data, also implemented by the CPU 211.

Other device architectures than illustrated by fig 2 are possible and compatible with the method of the invention. Notably, according to variant embodiments, the invention is implemented as a pure hardware implementation, for example in the form of a dedicated component (for example in an ASIC, FPGA or VLSI, respectively meaning Application Specific Integrated Circuit, Field-Programmable Gate Array and Very Large Scale Integration), or in the form of multiple electronic components integrated in a device or in the form of a mix of hardware and software components, for example as a dedicated electronic card in a computer, each of the means implemented in hardware, software or a mix of these, in same or different soft- or hardware modules.

## Claims

1. Method of obtaining user personalized data on audio/video content, **characterized in that** the method is implemented by a server device (200), the method comprising steps of:
- collection (105) of first information related to a first audio/video content stored on at least one device accessible to both said user and said server device;
- identification (109) of said first audio/video content, through matching of said first information related to said first audio/video content to second information accessible to said server device relating to an identified second audio/video content;
- association of an identifier (110) of said identified second audio/video content to collected said first information in user personalized data on audio/video content when said first and said second information match.

2. Method according to Claim 1, further comprising a step of adding of metadata related to said identified second audio/video content to said user personalized data.

3. Method according to Claim 2, wherein said user personalized data comprises a rating of said identified second audio/video content.

4. Method according to Claim 3, where said rating is determined as a function of at least a frequency of reoccurrence of at least one metadata item value in said user personalized data.

5. Method according to any of Claims 1 to 4, further comprising a step of, for each of said first audio/video content that cannot be identified, storing of collected said first information related to said first audio/video content that cannot be identified, and reiteration of at least said identification step when said second information accessible to said server device is updated.

6. Method according to any of Claims 1 to 5, **characterized in that** said first information comprises a first text string obtained from a file name of said first audio/video content, and that said matching comprises comparing of said first text string with a second text string comprised in said second information.

7. Method according to any of Claims 1 to 6, **characterized in that** said first information comprises a first audio/video fingerprint obtained by fingerprint computation of said first audio/video content, and that said matching comprises comparing of said first audio/video fingerprint with a second audio/video fingerprint comprised in said second audio/video information.

8. Method according to any of Claims 1 to 7, **characterized in that** said first information comprises a first text fragment obtained through voice recognition of at least a part of said first audio/video content and that said matching comprises comparing of said first text fragment with a second text fragment comprised in said second audio/video information.

9. Method according to any one of Claims 1 to 8, **characterized in that** said first information comprises a third text string obtained from a directory path of a storage location of said first audio/video content and that said matching comprises comparing said second text string with a fourth text string comprised in said second audio/video information.

10. A device (200) for obtaining user personalized data on audio/video content, the device comprising:
- means for collection (213) of first information related to a first audio/video content stored on at least one device accessible to both said user and said server device;
- means for identification (211) of said first audio/video content, through matching of said first information related to said first audio/video content to second information accessible to said server device relating to an identified second audio/video content;
- means for association of an identifier of said identified second audio/video content to collected said first information in user personalized data on audio/video content when said first and said second information match.

11. Device according to Claim 10, further comprising:
- means for adding of metadata related to said identified second audio/video content to said user personalized data.
